# EUROPEAN PATENT APPLICATION

(11) **EP 4 135 224 A1**
(43) Date of publication of application: **15.02.2023**
(21) Application number: 20934038.9
(22) Date of filing: 29.04.2020
(51) Int. Cl.: H04J 3/06, H04Q 11/00

(54) **DATA TRANSMISSION METHOD AND DEVICE**

(71) Applicant: Huawei Technologies Co., Ltd., Shenzhen, Guangdong 518129 (CN)
(72) Inventor: OU, Sisi, Shenzhen, Guangdong 518129 (CN); GONG, Zhaoming, Shenzhen, Guangdong 518129 (CN); FU, Nake, Shenzhen, Guangdong 518129 (CN)
(74) Representative: Goddar, Heinz J.
(86) International application number: PCT/CN2020/087876
(87) International publication number: WO 2021/217520

(57) **Abstract**

This application provides a data transmission method and an apparatus, and relates to the field of communication technologies. According to the technical solution, delay alignment can be quickly completed in a transmission process on a data frame that needs to be synchronously transmitted, to ensure synchronous transmission of the data frame. The method includes: A source node transmits a first data frame to a first node through a first transmission channel, and transmits a second data frame to the first node through a second transmission channel. The first node is a downstream node of the source node. The first data frame includes a first identifier, and the second data frame includes a second identifier. The first identifier corresponds to the second identifier, indicating the first node to perform delay alignment on the first data frame and the second data frame.

## Description

### TECHNICAL FIELD

Embodiments of this application relate to the field of communication technologies, and in particular, to a data transmission method and an apparatus.

### BACKGROUND

In a communication process, when a plurality of channels of service data is transmitted from a source node to a sink node through a transmission path between the source node and the sink node, transmission channels corresponding to corresponding to the channels of service data may be different, and therefore transmission delays of service data on different transmission channels are different when the service data is transmitted through the transmission path. As a result, when the sink node receives the plurality of channels of service data sent from the source node at the same time, receiving delays are different. Especially when a plurality of channels of service data that has a strict requirement on a delay difference is transmitted, a delay deviation between the plurality of channels of service data may affect normal running of a client service.

For example, service data A and service data B need to be synchronously sent from the source node to the sink node. Between the source node and an intermediate node on the transmission path: If a transmission channel used for transmitting the service data A is congested, a transmission channel used for transmitting the service data B is unblocked. In this case, the service data A may arrive at the intermediate node later than the service data B. When the foregoing case occurs frequently in a plurality of intermediate nodes on the transmission path, a delay deviation between the service data A and the service data B becomes increasingly large. In this way, the sink node may fail to perform delay alignment on the service data A and the service data B. This affects normal running of the client service. Especially in long-distance transmission, the preceding problem is more obvious.

### SUMMARY

Embodiments of this application provide a data transmission method and an apparatus, so that delay alignment can be performed in a transmission process on a data frame that needs to be synchronously transmitted. This ensures normal running of a client service.

To achieve the foregoing objective, embodiments of this application provide the following technical solutions.

According to a first aspect, an embodiment of this application provides a data transmission method. The method includes: A source node transmits a first data frame to a first node through a first transmission channel, and transmits a second data frame to the first node through a second transmission channel. The first node is a downstream node of the source node. The first data frame includes a first identifier, and the second data frame includes a second identifier. The first identifier corresponds to the second identifier, indicating the first node to perform delay alignment on the first data frame and the second data frame. The downstream node may be a sink node, or may be an intermediate node.

Based on this solution, in this embodiment of this application, when the source node sends, to the downstream node (that is, the first node), a plurality of data frames (for example, including the first data frame and the second data frame) that need to be synchronously transmitted, identifiers (for example, the first identifier in the first data frame and the second identifier in the second data frame in the foregoing solution) that correspond to each other are separately set in the plurality of data frames, and then the plurality of data frames are sent to the first node through the plurality of transmission channels. In this way, the first node may find, by using the identifiers that correspond to each other and that are included in the plurality of data frames, the plurality of data frames on which delay alignment needs to be performed, to perform delay alignment on the plurality of data frames. According to the foregoing method, a delay difference between the plurality of data frames on a transmission path can be eliminated. This ensures normal running of a client service.

Further, in the solution provided in this application, because the data frame sent by the source node includes the identifiers corresponding to each other, the first node can determine, without parsing service data in the data frame, the data frame on which delay alignment needs to be performed, so that delay alignment can be quickly completed in a transmission process on the data frame that needs to be synchronously transmitted. This improves efficiency of delay alignment on the data frame.

In a possible design, the first data frame further includes first service data, and the second data frame further includes second service data. Before the source node transmits the first data frame to the first node through the first transmission channel, and transmits the second data frame to the first node through the second transmission channel, the method further includes: The source node receives the first service data and the second service data. After receiving the first service data and the second service data, the source node performs delay alignment on the first service data and the second service data.

Based on this solution, it is considered that there may be a case in which when the source node receives a plurality of channels of service data (for example, including the first service data and the second service data) that need to be synchronously transmitted, there may be already a delay difference between the plurality of channels of service data. Therefore, to eliminate impact of the delay difference on subsequent transmission, in the foregoing solution of this application, after receiving the plurality of channels of service data that needs to be synchronously transmitted, the source node first performs delay alignment on the plurality of channels of service data. In this way, the source node can synchronously transmit, to the first node as much as possible, data frames (including: the first data frame including the first service data and the second data frame including the second service data) including the plurality of channels of service data. This reduces a workload of the first node when performing delay alignment on the first data frame and the second data frame.

In a possible design, that the source node performs delay alignment on the first service data and the second service data specifically includes: The source node determines interval duration between receiving the first service data and receiving the second service data. Then, the source node performs delay alignment on the first service data and the second service data based on the determined interval duration.

Based on the foregoing solution, the plurality of channels of service data can be synchronously encapsulated into data frames corresponding to the service data. In this way, the source node can synchronously transmit, to the first node as much as possible, the data frames (including: the first data frame including the first service data and the second data frame including the second service data) including the plurality of channels of service data.

In a possible design, the first data frame and the second data frame each are an optical channel data unit (Optical channel data unit k, ODUk) frame. The first identifier is included in a preset field in an overhead area of the ODUk frame, and the second identifier is included in a preset field in an overhead area of the ODUk frame. Alternatively, the first data frame and the second data frame each are an optical channel transport unit (Optical channel Transport Unit k, OTUk) frame. The first identifier is included in a preset field in an overhead area of the OTUk frame, and the second identifier is included in a preset field in an overhead area of the OTUk frame.

Based on the foregoing solution, the identifiers (including the first identifier and the second identifier) that are in the data frame and that indicate to perform delay alignment on the data frame are set in the overhead area of the ODUk frame or the overhead area of the OTUk frame. Therefore, after receiving the data frame, the downstream node (that is, the first node), can determine, by parsing the data frame to an ODUk layer or an OTUk layer, the data frame on which delay alignment needs to be performed. Because the first node does not need to parse a valid payload (payload) in the data frame, efficiency of performing delay alignment on the data frame can be improved by using this solution.

In a possible design, the preset field is a multiframe alignment signal (Multi-frame Alignment Signal, MFAS) field.

Based on the foregoing solution, it is considered that in an optical transport network (optical transport network, OTN) standard, the MFAS field functions as a frame count byte to identify a plurality of frames continuously sent on a same transmission channel. Therefore, in this application, the identifiers (including the first identifier and the second identifier) that are in the data frame and that indicate to perform delay alignment on the data frame are set in the MFAS field, and an original function of the MFAS field is not affected. In addition, it can be further ensured that the data frame records the identifier that indicates to perform delay alignment on the data frame. Compared with setting the identifier that indicates to perform delay alignment on the data frame in another field, setting the identifier in the MFAS field can avoid occupying additional overhead resources in the data frame for setting the identifier in the data frame.

In a possible design, when a first initial value of an MFAS field of the first data frame corresponds to a second initial value of an MFAS field of the second data frame, the first identifier is the first initial value, and the second identifier is the second initial value.

In the foregoing design, when the first initial value corresponds to the second initial value, the initial value of the MFAS field in the data frame may not be changed. In this way, the initial value of the MFAS field in the data frame needs to be changed only when the first initial value does not correspond to the second initial value. This can reduce a quantity of times of changing the MFAS field in the data frame and impact on the original function of the MFAS field.

In a possible design, that the first identifier corresponds to the second identifier includes that the first identifier is the same as the second identifier.

Based on the foregoing solution, the first node may determine, by determining whether the first identifier included in the data frame received from the first transmission channel is the same as the second identifier included in the data frame received from the second transmission channel, whether delay alignment needs to be performed on the two data frames. In this way, the data frame on which delay alignment needs to be performed can be quickly and effectively found.

According to a second aspect, an embodiment of this application provides a data transmission method. The method includes: A first node receives a first data frame through a first transmission channel, and receives a second data frame through a second transmission channel. The first data frame includes a first identifier, and the second data frame includes a second identifier. The first node performs delay alignment on the first data frame and the second data frame when determining that the first identifier corresponds to the second identifier. The first node is an intermediate node or a sink node.

Based on this solution, the first node performs delay alignment on data frames that are in data frames from a plurality of transmission channels and in which identifiers corresponding to each other are set, to ensure synchronous transmission of these data frames. Further, in the solutions provided in this application, because the data frame includes the identifiers corresponding to each other, the first node can determine, without parsing service data in the data frame, the data frame on which delay alignment needs to be performed, so that delay alignment can be quickly completed in a transmission process on the data frame that needs to be synchronously transmitted. This ensures synchronous transmission of the data frame.

In a possible design, the performing delay alignment on the first data frame and the second data frame includes: The first node determines interval duration between receiving the first data frame and receiving the second data frame. The first node performs delay alignment on the first data frame and the second data frame based on the interval duration.

Based on the foregoing solution, delays of a plurality of channels of data frames (including the first data frame and the second data frame) can be aligned, to synchronously transmit the plurality of data frames to a downstream node or synchronously parse the plurality of data frames to obtain service data in the data frames.

In a possible design, the first data frame and the second data frame each are an optical channel data unit (Optical channel data unit k, ODUk) frame. The first identifier is included in a preset field in an overhead area of the ODUk frame, and the second identifier is included in a preset field in an overhead area of the ODUk frame. Alternatively, the first data frame and the second data frame each are an optical channel transport unit (Optical channel Transport Unit k, OTUk) frame. The first identifier is included in a preset field in an overhead area of the OTUk frame, and the second identifier is included in a preset field in an overhead area of the OTUk frame.

Based on the foregoing solution, identifiers (including the first identifier and the second identifier) that are in the data frame and that indicate to perform delay alignment on the data frame are set in the overhead area of the ODUk frame or the overhead area of the OTUk frame. Therefore, after receiving the data frame, the first node can determine, by parsing the data frame to an ODUk layer or an OTUk layer, the data frame on which delay alignment needs to be performed. Because the first node does not need to parse a valid payload (payload) in the data frame, efficiency of performing delay alignment on the data frame can be improved by using this solution.

In a possible design, the preset field is a multiframe alignment signal (Multi-frame Alignment Signal, MFAS) field.

Based on the foregoing solution, it is considered that in an optical transport network (optical transport network, OTN) standard, the MFAS field functions as a frame count byte to identify a plurality of frames continuously sent on a same transmission channel. Therefore, in this application, the identifiers (including the first identifier and the second identifier) that are in the data frame and that indicate to perform delay alignment on the data frame are set in the MFAS field, and an original function of the MFAS field is not affected. In addition, it can be further ensured that the data frame records the identifier that indicates to perform delay alignment on the data frame. Compared with setting the identifier that indicates to perform delay alignment on the data frame in another field, setting the identifier in the MFAS field can avoid occupying additional overhead resources in the data frame for setting the identifier in the data frame.

In a possible design, that the first identifier corresponds to the second identifier includes that the first identifier is the same as the second identifier.

Based on the foregoing solution, the first node may determine, by determining whether the first identifier included in the data frame received from the first transmission channel is the same as the second identifier included in the data frame received from the second transmission channel, whether delay alignment needs to be performed on the two data frames. In this way, the data frame on which delay alignment needs to be performed can be quickly and effectively found.

In a possible design, when the first node is an intermediate node, the performing delay alignment on the first data frame and the second data frame includes:

The first node synchronously transmits the first data frame and the second data frame to a downstream node of the first node.

According to a third aspect, an embodiment of this application provides a data transmission apparatus. The data transmission apparatus may be a chip or a system on chip of a data transmission node. The data transmission apparatus may implement functions performed by the source node according to the first aspect or the possible designs of the first aspect. The function may be implemented by hardware, or may be implemented by hardware by executing corresponding software. The hardware or software includes one or more modules corresponding to the functions. For example, the data transmission apparatus may include a transmission unit. The transmission unit may be configured to transmit a first data frame to a first node through a first transmission channel, and transmit a second data frame to the first node through a second transmission channel. The first node is a downstream node of the data transmission apparatus. The first data frame includes a first identifier, and the second data frame includes a second identifier. The first identifier corresponds to the second identifier, indicating the first node to perform delay alignment on the first data frame and the second data frame. Certainly, the data transmission apparatus may further include more or fewer units, configured to implement another function of the source node.

In a possible design, the first data frame further includes first service data, and the second data frame further includes second service data. The data transmission apparatus further includes: a receiving unit, configured to receive the first service data and the second service data before the transmission unit transmits the first data frame to the first node through the first transmission channel and transmits the second data frame to the first node through the second transmission channel. The receiving unit is further configured to perform delay alignment on the first service data and the second service data after receiving the first service data and the second service data.

In a possible design, the receiving unit is specifically configured to determine interval duration between receiving the first service data and receiving the second service data; and the receiving unit is further specifically configured to perform delay alignment on the first service data and the second service data based on the interval duration.

In a possible design, the receiving unit is specifically configured to synchronously send the first service data and the second service data to the transmission unit based on the interval duration. The transmission unit is further configured to: before transmitting the first data frame to the first node through the first transmission channel and transmitting the second data frame to the first node through the second transmission channel, encapsulate the first service data from the receiving unit into the first data frame, and encapsulate the second service data from the receiving unit into the second data frame.

In a possible design, the first data frame and the second data frame each are an optical channel data unit ODUk frame. The first identifier is included in a preset field in an overhead area of the ODUk frame, and the second identifier is included in a preset field in an overhead area of the ODUk frame. Alternatively, the first data frame and the second data frame each are an optical channel transport unit OTUk frame. The first identifier is included in a preset field in an overhead area of the OTUk frame, and the second identifier is included in a preset field in an overhead area of the OTUk frame.

In a possible design, the preset field is a multiframe alignment signal MFAS field.

In a possible design, when a first initial value of an MFAS field of the first data frame corresponds to a second initial value of an MFAS field of the second data frame, the first identifier is the first initial value, and the second identifier is the second initial value.

In a possible design, that the first identifier corresponds to the second identifier includes that the first identifier is the same as the second identifier.

According to a fourth aspect, an embodiment of this application provides a data transmission apparatus. The data transmission apparatus may be a chip or a system on chip of a data transmission node. The data transmission apparatus may implement functions performed by the first node according to the second aspect or the possible designs of the second aspect. The function may be implemented by hardware, or may be implemented by hardware by executing corresponding software. The hardware or software includes one or more modules corresponding to the functions. For example, the data transmission apparatus may include a receiving unit and a delay alignment unit. The receiving unit is configured to receive a first data frame through a first transmission channel, and receive a second data frame through a second transmission channel. The first data frame includes a first identifier, and the second data frame includes a second identifier. The delay alignment unit is configured to perform delay alignment on the first data frame and the second data frame when determining that the first identifier corresponds to the second identifier. The data transmission apparatus is an intermediate node or a sink node.

In a possible design, the delay alignment unit is specifically configured to determine interval duration between receiving the first data frame and receiving the second data frame when determining that the first identifier corresponds to the second identifier. The delay alignment unit is further specifically configured to perform delay alignment on the first data frame and the second data frame based on the interval duration.

In a possible design, the first data frame and the second data frame each are an optical channel data unit ODUk frame. The first identifier is included in a preset field in an overhead area of the ODUk frame, and the second identifier is included in a preset field in an overhead area of the ODUk frame. Alternatively, the first data frame and the second data frame each are an optical channel transport unit OTUk frame. The first identifier is included in a preset field in an overhead area of the OTUk frame, and the second identifier is included in a preset field in an overhead area of the OTUk frame.

In a possible design, the preset field is a multiframe alignment signal MFAS field.

In a possible design, that the first identifier corresponds to the second identifier includes that the first identifier is the same as the second identifier.

In a possible design, when the first node is an intermediate node, the delay alignment unit is specifically configured to synchronously transmit the first data frame and the second data frame to a downstream node of the data transmission apparatus.

According to a fifth aspect, an embodiment of this application provides a data transmission apparatus. The data transmission apparatus includes one or more processors, and the one or more processors are coupled to one or more memories. The one or more memories store computer instructions. When the one or more processors execute the computer instructions, the data transmission apparatus performs the data transmission method performed by the source node according to the first aspect or the possible designs of the first aspect, or when the one or more processors execute the computer instructions, the data transmission apparatus performs the data transmission method performed by the first node according to the second aspect or the possible designs of the second aspect.

According to a sixth aspect, an embodiment of this application provides a data transmission system. The data transmission system includes a source node, one or more intermediate nodes, and a sink node. The source node is configured to perform the data transmission method provided in the first aspect. At least one of the one or more intermediate nodes and/or the sink node is configured to perform the data transmission method provided in the second aspect.

According to a seventh aspect, an embodiment of this application provides a computer-readable storage medium. The computer-readable storage medium stores instructions. When the instructions are run, the data transmission method performed by the source node according to the first aspect or the possible designs of the first aspect is performed; or when the instructions are run, the data transmission method performed by the first node according to the second aspect or the possible designs of the second aspect is performed.

According to an eighth aspect, an embodiment of this application provides a computer program product including instructions. When the computer program product runs on a computer, the computer is enabled to perform the data transmission method performed by the source node according to the first aspect or the possible designs of the first aspect, or the computer is enabled to perform the data transmission method performed by the first node according to the second aspect or the possible designs of the second aspect.

According to a ninth aspect, an embodiment of this application provides a chip. The chip includes a processor. When the processor executes computer program instructions, the chip is enabled to perform the data transmission method performed by the source node according to the first aspect or the possible designs of the first aspect, or the chip is enabled to perform the data transmission method performed by the first node according to the second aspect or the possible designs of the second aspect. The computer program instructions may be from a memory inside the chip, or may be from a memory outside the chip. Optionally, the chip may further be used as an input/output circuit of a communication interface.

For technical effects brought by any one of the designs of the third aspect to the ninth aspect, refer to technical effects brought by different designs of the first aspect or the second aspect. Details are not described herein again.

### BRIEF DESCRIPTION OF DRAWINGS

FIG. 1 is frame structures of an OPUk frame, an ODUk frame, and an OTUk frame in an OTN network according to an embodiment of this application;
FIG. 2 is a schematic flowchart 1 of data transmission in an OTN network according to an embodiment of this application;
FIG. 3 is a schematic flowchart 2 of data transmission in an OTN network according to an embodiment of this application;
FIG. 4 is a schematic diagram of a structure of a transmission network according to an embodiment of this application;
FIG. 5 is a schematic flowchart 1 of a data transmission method according to an embodiment of this application;
FIG. 6 is a schematic flowchart 2 of a data transmission method according to an embodiment of this application;
FIG. 7 is a schematic flowchart 3 of a data transmission method according to an embodiment of this application;
FIG. 8 is a schematic diagram 1 of a structure of a data transmission apparatus according to an embodiment of this application;
FIG. 9 is a schematic diagram 2 of a structure of a data transmission apparatus according to an embodiment of this application;
FIG. 10 is a schematic diagram 3 of a structure of a data transmission apparatus according to an embodiment of this application;
FIG. 11 is a schematic diagram 4 of a structure of a data transmission apparatus according to an embodiment of this application;
FIG. 12 is a schematic diagram 5 of a structure of a data transmission apparatus according to an embodiment of this application; and
FIG. 13 is a schematic diagram of a structure of a data transmission system according to an embodiment of this application.

### DESCRIPTION OF EMBODIMENTS

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, "a plurality of" means two or more than two unless otherwise specified.

To facilitate understanding of this application, related technologies in this application are described herein.

Optical transport network (optical transport network, OTN): The OTN is a transport network that implements transmission, multiplexing, route selection, and monitoring of service signals in an optical domain, and ensures performance indicators and survivability of the service signals.

In an OTN network, after obtaining to-be-transmitted service data, a source node first encapsulates the service data into an optical channel payload unit (Optical Channel Payload Unit-k, OPUk) frame. Then, the OPUk frame is encapsulated into an ODUk frame by adding an ODUk overhead to the OPUk frame. Then, the ODUk frame is encapsulated into an OTUk frame and transmitted to a downstream node. In the OPUk, ODUk, or OTUk, k refers to a channel level corresponding to a data frame. A larger value of k indicates a higher channel level and a higher corresponding transmission rate. For example, a transmission rate of an OTU 1 channel is the lowest, and transmission rates of the OTU1 channel, an OTU2 channel, and an OTU3 channel increase sequentially. Similarly, this is also applied to an OPUk channel and an ODUk channel.

For example, service data is first mapped to an OPU1 payload area to obtain an OPU1 frame; then an ODU overhead is added to obtain an ODU1 frame, and then an OTLT1 overhead is added to obtain an OTU1 frame. For another example, service data is mapped to an OPU2 payload area to obtain an OPU2 frame, an ODU overhead is added to obtain an ODU2 frame, and then an OTU2 overhead is added to obtain an OTU2 frame.

In addition, when a multiplexing technology is used, after the service data is encapsulated into a low-order OPUk frame and an ODU overhead is added to obtain a low-order ODUk frame, the low-order ODUk frame may be multiplexed into a high-order OPUk frame at a higher rate and an ODU overhead is added to obtain a high-order ODUk frame, and then a high-order OTUk frame at a higher transmission rate is used for completing data transmission.

For example, in an OTN network, a transmission rate of an OTU2 is four times that of an OTU1. Therefore, four ODU1 channels may be multiplexed into one OTU2 channel for transmission. In this case, the ODU1 frame needs to be encapsulated into an ODTUG frame, and then the ODTUG frame is mapped to the OTU2 for transmission.

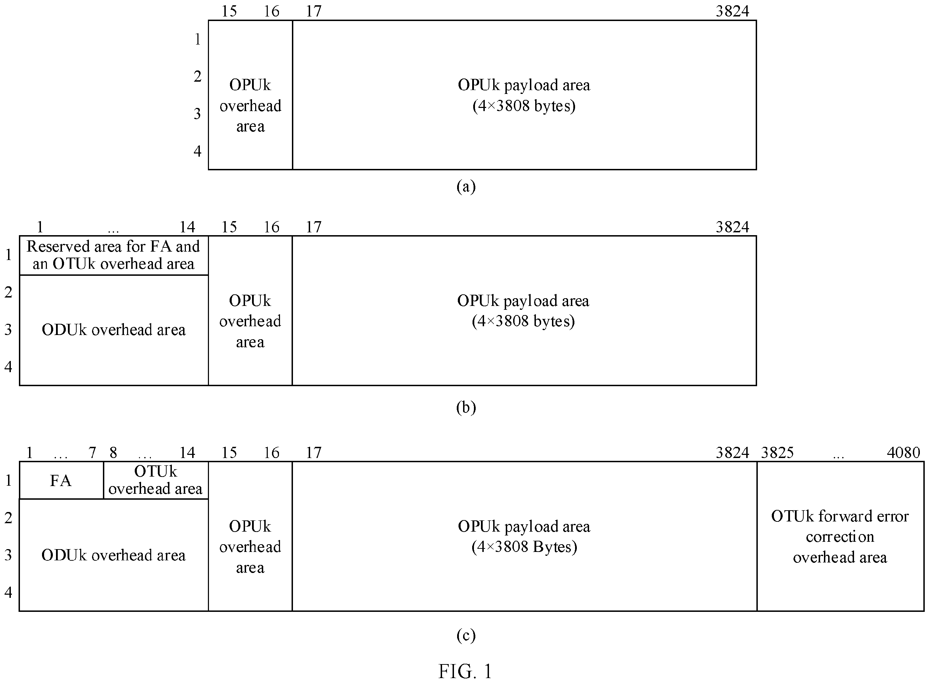

FIG. 1 shows frame structures of an OPUk, an ODUk, and an OTUk. (a) in FIG. 1 shows a frame structure of an OPUk. The OPUk frame includes four rows of 3810 bytes, and specifically includes four rows of 2-byte OPUk overhead areas (OPUk overhead area) and four rows of 3808-byte OPUk payload areas (OPUk payload area). The OPUk payload area is used for carrying service data (in addition, in the case of multiplexing, an overhead area of a high-order OPUk is used for multiplexing a lower-order ODUk frame).

(b) in FIG. 1 shows a frame structure of an ODUk. The ODUk frame includes four rows of 3824 bytes. Four rows of 3810-byte OPUk frames and ODUk overhead areas (ODUk overhead area) are included. In addition, first 14 bytes of a first row in the ODUk frame further include a reserved area for frame alignment (frame alignment, FA) and an OTUk overhead (reserved area for FA and OTUk overhead) area. That the FA specifically includes a frame alignment signal (frame alignment signal, FAS) field and a multiframe alignment signal (Multi-frame Alignment Signal, MFAS) field is not shown in the figure.

(c) in FIG. 1 shows a frame structure of an OTUk frame. The OTUk frame includes four rows of 4080 bytes. Compared with the ODUk frame, an OTUk forward error correction (Forward Error Correction, FEC) field (that is, bytes 3825 to 4080 in (c) in FIG. 1) is added to the OTUk frame.

It should be noted that, when the multiplexing technology is not used, FA and an OTUk overhead in an OTUk frame may be parsed at an OTUk layer, or may be parsed at an ODUk layer. When the OTN multiplexing technology is used, four rows of 3810 bytes included in a lower-order ODUk frame are multiplexed into a high-order OPUk payload area. In this case, the lower-order ODUk frame and a high-order OTUk frame generated by multiplexing respectively include their own FA and OTUk overhead areas.

In addition, it should be noted that, in the OTN network, a process from encapsulating an ODUk frame by an upstream node to obtaining the ODUk frame parsed by a downstream node between an upstream node and a downstream node on a transmission path is generally used as one ODUk channel. Similarly, a process from encapsulating an OTUk frame by the upstream node to obtaining the OTUk frame parsed by the downstream node is used as one OTUk channel. When no multiplexing technology is used, one ODUk channel correspondingly accesses one OTUk channel. That is, the ODUk channel and the OTUk channel are in a one-to-one correspondence. When the multiplexing technology is used, a plurality of lower-order ODUk channels may correspond to one high-order OTUk channel.

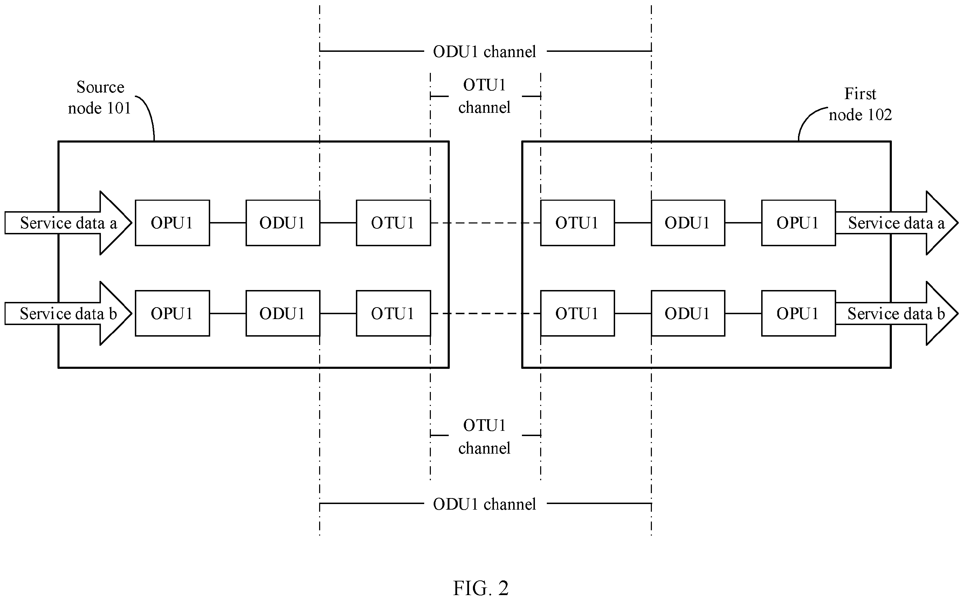

For example, when no multiplexing technology is used, as shown in FIG. 2, after receiving two channels of service data (service data a and service data b), a source node 101 encapsulates the two channels of service data layer by layer to obtain an OTU1 frame corresponding to the service data, and then transmits the OTU1 frame to a first node 102 (the first node 102 may be one of downstream nodes of the source node 101) through an optical channel. In a process from encapsulating the service data a into an ODU1 frame by the source node 101 to obtaining the ODU1 frame that is parsed by the first node 102 and that corresponds to the service data a, one ODU1 channel is formed. In a process from encapsulating the service data b into an ODU1 frame by the source node 101 to obtaining the ODU1 frame that is parsed by the first node 102 and that corresponds to the service data b, another ODU 1 channel is formed. Each of the two ODUk channels corresponds to an OTU1 channel.

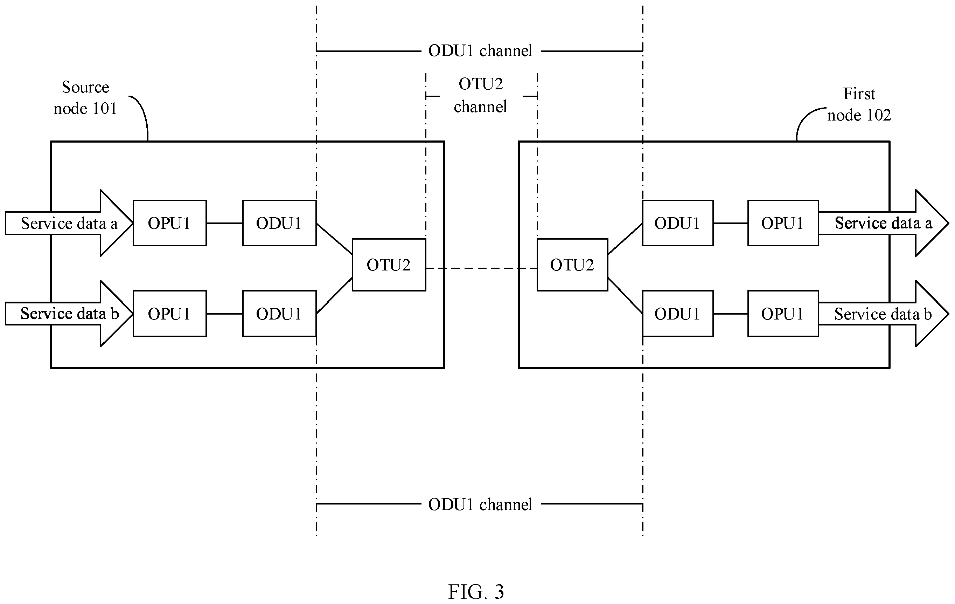

When the multiplexing technology is used, as shown in FIG. 3, after receiving two channels of service data (service data a and service data b), a source node 101 encapsulates the two channels of service data into an ODU1 frame, and may multiplex two ODU1 channels corresponding to the two channels of service data to one high-order OTU2 channel for transmission. In this case, the service data a and the service data b separately correspond to one ODU1 channel (two ODU1 channels in total). In addition, the two ODU1 channels are multiplexed into one high-order OTU2 channel (for example, in FIG. 3, two ODU1 channels are multiplexed into one OTU2 channel) for data transmission.

It should be noted that FIG. 2 and FIG. 3 merely examples for describing a service data transmission process in an OTN network. In specific implementation, when the first node 102 is an intermediate node, the first node 102 may parse a data frame to different layers based on different requirements when parsing the received data frame, and does not need to parse out service data from the data frame. For example, in an implementation, the first node 102 may not parse an OTUk frame, but directly send the OTUk frame to a downstream node on a transmission path. For another example, the first node 102 may further parse a data frame to an ODUk layer, and then re-encapsulate an ODUk frame obtained through parsing into the OTUk frame and transmit the OTUk frame to the downstream node.

In a communication process, in a conventional data transmission method, a source node maps one channel of to-be-transmitted service data to one transmission channel for transmission to a downstream node, and then after passing through one or more intermediate nodes, a sink node receives a data frame and parses the data frame to obtain the service data. The transmission channel may be specifically an independent transmission channel obtained through division between an upstream node and a downstream node on the transmission path by using a hardware or software program. For example, the transmission channel may be an ODUk channel, an OTUk channel, or the like in an OTN network.

For example, in the OTN network, the source node encapsulates service data into an optical channel data unit (Optical channel Data Unit k, ODUk) frame, and then transmits the ODUk frame to a downstream node through one ODUk channel. After passing through the one or more intermediate nodes, the sink node receives the ODUk frame through the corresponding ODUk channel, and obtains the service data by parsing the ODUk frame.

Service data can be transmitted by using the foregoing manner. However, in some scenarios, a plurality of channels of service data need to be synchronously transmitted to the sink node. For example, during transmission of some FlexE services, it needs to be ensured that a plurality of channels of service data is synchronously received and parsed by the sink node, to perform subsequent processing.

For the foregoing case, if the conventional data transmission method is used, delays of data transmission on a plurality of transmission paths are different. Therefore, it is usually difficult for the sink node to perform delay alignment on the plurality of channels of service data after receiving the plurality of channels of service data from the plurality of transmission paths. Consequently, a delay deviation between the plurality of channels of service data cannot meet a requirement, and normal running of a client service may be affected.

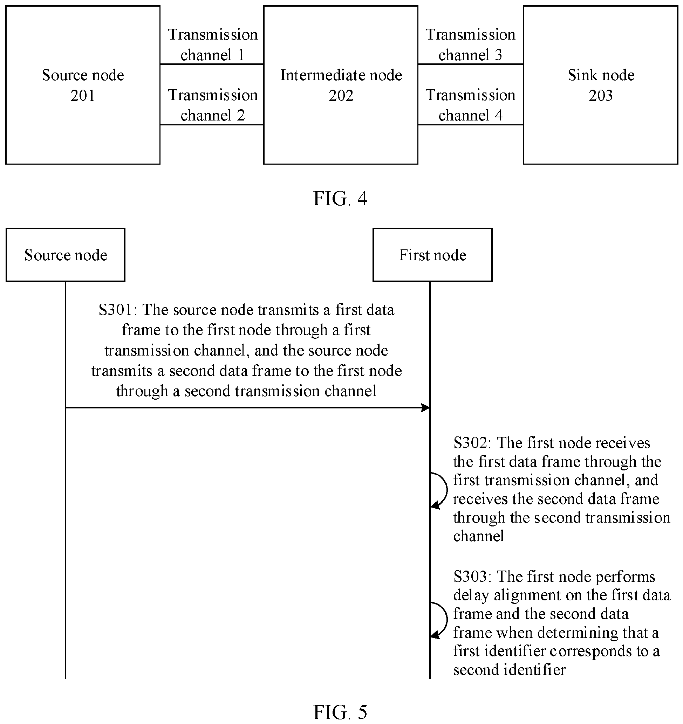

For example, as shown in FIG. 4, in a process of sending two channels of service data from a source node 201 to a sink node 203, a transmission path from the source node 201 to the sink node 203 may include one or more intermediate nodes (only one intermediate node, that is, an intermediate node 202, is shown as an example in the figure). Another intermediate node may be further included between the source node 201 and the intermediate node 202 or between the intermediate node 202 and the sink node 203. After the source node 201 obtains the two channels of service data that has a requirement on a delay deviation, the source node 201 encapsulates first service data into a data frame, and sends the data frame to the intermediate node 202 through a transmission channel 1. Then, the intermediate node 202 sends the data frame including the first service data to the sink node 203 through a transmission channel 3. In addition, the source node 202 encapsulates second service data into a data frame, and sends the data frame to the intermediate node 202 through a transmission channel 2. Then, the intermediate node 202 sends the data frame including the second service data to the sink node 203 through a transmission channel 4. The transmission channels 1/2/3/4 each may be an ODUk channel, or the transmission channels 1/2/3/4 each may be an OTUk channel, or a transmission channel of another type. Transmission delays of data frames on different transmission channels are different. Therefore, a deviation occurs in delays at which the data frames that respectively carry the two channels of service data arrive at the sink node. As a length of a transmission distance and a quantity of intermediate nodes between the source node and the sink node increases, the delay deviation becomes increasingly large. As a result, the sink node cannot eliminate the delay deviation between the two channels of service data, and further, service transmission may fail.

To resolve the foregoing problem, the following technical solutions are provided in related technologies.

Solution 1: A large-capacity buffer may be set on a sink node. Further, the sink node may use the large-capacity buffer to absorb a delay on a transmission path. For example, after a source node separately maps two channels of service data to two transmission channels for transmission, transmission frames carrying the two channels of service data arrive at the sink node after passing through a plurality of intermediate nodes on the transmission path. In this case, there is a large delay deviation when the two data frames arrive at the sink node. The sink node may buffer, by using the large-capacity buffer, service data carried in a first received data frame, and perform subsequent processing on the two channels of service data after receiving another data frame, to complete service delay alignment.

In the foregoing implementation process, although a plurality of channels of service data can be synchronously transmitted, the large-capacity cache needs to be added on the sink node of the service data. This increases costs of the entire system. In addition, as service transmission paths increase, more and more nodes need to be cached. This further increases costs of the system.

Solution 2: Service signals in data frames may be parsed by a plurality of intermediate nodes on a transmission path. After it is determined that service data in a plurality of data frames is service data on which delay alignment needs to be performed, delay alignment is performed on the plurality of data frames, and then the plurality of data frames are forwarded to a next node.

For example, a source node sends, to an intermediate node through a first transmission channel, a first data frame including first service data, and sends, to the intermediate node through a second transmission channel, the first data frame including second service data. The intermediate node receives the data frame from the source node through the first transmission channel and the second transmission channel, and parses each received data frame to obtain the service data in the data frame. Then, after determining, based on content of the service data, that delays of the first data frame and the second data frame need to be aligned, the intermediate node performs delay alignment processing on the two data frames, and then sends the two data frames to a next node. The rest may be deduced by analogy until the first data frame and the second data frame are sent to a sink node.

It can be learned that when the foregoing implementation process is applied, to determine a data frame that requires delay alignment, a node on the transmission path needs to occupy a node resource to parse service data in the data frame, and then can perform delay alignment on the data frame. This also increases costs of the system.

Solution 3: Service data on which delay alignment needs to be performed may be bundled on a source node, and then the bundled data is mapped to one transmission channel for transmission. For example, in an OTN network, after bundling a plurality of channels of service data, the source node transmits the service data through a same ODUk channel. In this manner, a delay difference between the plurality of channels of service data can be controlled. However, because a bandwidth of a transmission channel is limited, the delay difference between the plurality of channels of service data still cannot be eliminated when total bandwidths of the plurality of channels of service data exceeds a bandwidth limit of the transmission channel. Therefore, the method is applicable only to transmission of a plurality of channels of service data with a small data volume, and can be applied to limited scenarios.

To resolve the foregoing problem, in this embodiment of this application, in a process of transmitting a plurality of service data that has a requirement on a transmission delay, after obtaining the service data, a source node may set identifiers corresponding to each other in a plurality of data frames including the plurality of service data when encapsulating the service data into the data frame.

For example, after obtaining N channels of service data that has a requirement on a transmission delay, the source node separately encapsulates the N channels of service data into N data frames, and an identifier is set in each data frame in the N data frames (for example, a data frame 1 includes an identifier 1, a data frame 2 includes an identifier 2, a data frame 3 includes an identifier 3, ..., and a data frame N includes an identifier N). In addition, there is a preset correspondence between the identifier 1 and the identifier N (for example, the identifier 1 is the same as the identifier N, that is, the data frame 1 to the data frame N include same identifiers).

Then, the source node transmits the N data frames to a first node (the first node may be an intermediate node or a sink node) through N transmission paths. In this way, when receiving the data frame through the N transmission channels, the first node may find, based on the preset correspondence between the identifier 1 and the identifier N, the data frame on which delay alignment needs to be performed, and complete delay alignment. According to the foregoing method, a plurality of data frames can be synchronously transmitted in a transmission process. This ensures normal running of a client service.

Further, in this embodiment of this application, the intermediate node can find, by using the identifier in the data frame, the data frame on which delay alignment needs to be performed. In this way, the intermediate node no longer needs to parse the service data in the data frame, to determine, based on content of the service data, the data frame on which delay alignment is performed. Therefore, according to the data transmission method provided in this embodiment of this application, resource occupation of the intermediate node can be reduced, and delay alignment can be further quickly performed on the data frame. According to another aspect, in this embodiment of this application, the intermediate node can find, by using the identifier in the data frame, the data frame on which delay alignment needs to be performed. Therefore, when a plurality of data frames are transmitted to the sink node, the sink node needs only to perform delay alignment on delay differences of the plurality of data frames on a part of the transmission path adjacent to the sink node (that is, a segment of the transmission path from the intermediate node to the sink node on which delay alignment has been performed on the plurality of data frames). Therefore, there is no need to add a large-capacity buffer on the sink node. According to still another aspect, because the technical solutions provided in this embodiment of this application can ensure synchronous transmission of a plurality of data frames on a plurality of transmission channels, an application scenario of the solutions is not limited due to limited bandwidth of a single transmission channel.

Based on the foregoing technical principles, an embodiment of this application provides a data transmission method, which may be applied to the application scenario shown in FIG. 4. Specifically, as shown in FIG. 5, the data transmission method may include the following content of S301 to S303.

S301: A source node transmits a first data frame to a first node through a first transmission channel, and a source node transmits a second data frame to the first node through a second transmission channel.

The first node is a downstream node of the source node. In an implementation, the downstream node may be an intermediate node. In another implementation, the downstream node may alternatively be a sink node.

In this embodiment of this application, the first transmission channel and the second transmission channel may be two mutually independent transmission channels obtained through division between the source node and the first node by using a hardware or software program. For example, when the method provided in this embodiment of this application is applied to an OTN network, the first transmission channel and the second transmission channel each may be an ODUk channel. Alternatively, the first transmission channel and the second transmission channel each may be an OTUk channel. Alternatively, the first transmission channel and the second transmission channel each may be a transmission channel of another type in the OTN network. When the first transmission channel and the second transmission channel are ODUk channels, the first data frame and the second data frame each may be an ODUk frame. When the first transmission channel and the second transmission channel are OTUk channels, the first data frame and the second data frame each may be an OTUk frame. Types of the first transmission channel and the second transmission channel, and types of the first data frame and the second data frame may not be limited in this embodiment of this application.

In addition, the first data frame includes a first identifier, and the second data frame includes a second identifier. The first identifier corresponds to the second identifier, indicating the first node to perform delay alignment on the first data frame and the second data frame.

Locations of the first identifier and the second identifier in the first data frame and the second data frame respectively may not be limited in this embodiment of this application. Provided that the first node can identify, by using the first identifier and the second identifier, in data frames from the first transmission channel and the second transmission channel, that the first data frame and the second data frame are data frames on which delay alignment needs to be performed, this is not limited in this embodiment of this application.

S302: The first node receives the first data frame through the first transmission channel, and receives the second data frame through the second transmission channel.

S303: The first node performs delay alignment on the first data frame and the second data frame when determining that the first identifier corresponds to the second identifier.

Specifically, when receiving the data frame from the source node through the first transmission channel and the second transmission channel, the first node may determine whether the first identifier carried in the data frame received through the first transmission channel corresponds to the second identifier carried in the data frame received through the second transmission channel. Then, when it is determined that the first identifier corresponds to the second identifier, delay alignment is performed on the two data frames.

For example, after the first node receives, through the first transmission channel, the first data frame that carries the first identifier, the first node starts to detect the data frame from the second transmission channel. If it is detected that the second data frame that carries the second identifier is not received from the second transmission channel, buffering the first data frame until the second data frame is detected, and delay alignment is performed on the first data frame and the second data frame.

It should be noted that delay alignment in this embodiment of this application may specifically refer to a corresponding operation performed to enable synchronous transmission of the two data frames.

For example, when the first node is an intermediate node, that the first node performs delay alignment on the first data frame and the second data frame may specifically include: The first node synchronously transmits the first data frame and the second data frame to a downstream node of the first node. For another example, when the first node is a sink node, that the first node performs delay alignment on the first data frame and the second data frame may specifically include: The first node synchronously unpacks the first data frame and the second data frame, to synchronously obtain service data included in the first data frame and the second data frame.

The "synchronous transmission" described in this embodiment of this application may specifically mean that the two data frames are transmitted to a next transmission node at the same time. In addition, the "synchronous transmission" may further specifically mean that when a data frame is transmitted to a next transmission node, transmission delays of the two data frames are controlled within a specific range. The "synchronous unpacking" may specifically mean that the two data frames are unpacked at the same time. In addition, the "synchronous unpacking" may further specifically mean that to control a delay difference between the two data frames in an unpacking process within a specific range. In other words, the word "synchronization" used in this embodiment of this application does not necessarily indicate "at the same time", and may alternatively indicate that delays of the two data frames during transmission or unpacking are controlled, so that a delay difference between the two data frames during transmission or unpacking meets a related requirement of service data transmission.

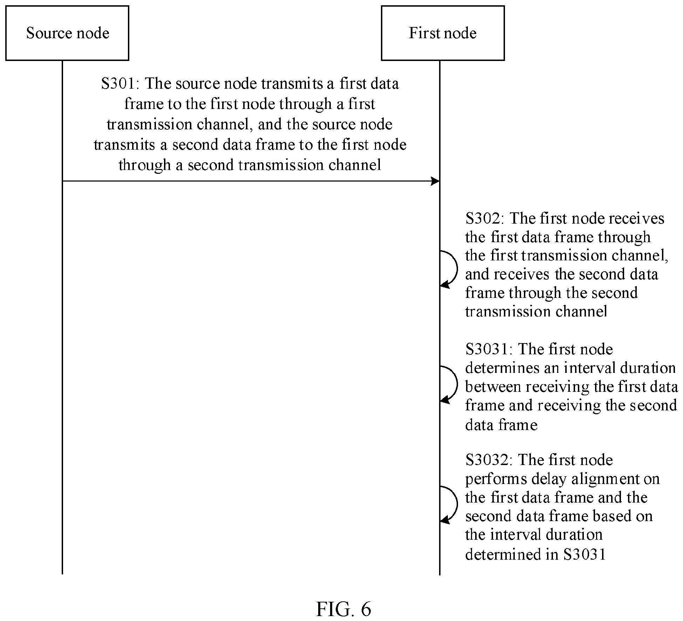

In a possible design, to perform delay alignment on the first data frame and the second data frame, interval duration in which the first node receives the first data frame and the second data frame may be detected, and delay alignment is performed on the two data frames based on the interval duration, to ensure an effect of delay alignment. Further, as shown in FIG. 6, step S303 may include the following steps.

S3031: The first node determines the interval duration between receiving the first data frame and receiving the second data frame.

For example, if the first node receives first service data from the source node at a moment A, and then receives second service data at a moment B, the first node determines that the interval duration between receiving the first service data and receiving the second service data is a time length between the moment A and the moment B.

S3032: The first node performs delay alignment on the first data frame and the second data frame based on the interval duration determined in S3031.

Specifically, when the first node is an intermediate node, the performing delay alignment on the first data frame and the second data frame may specifically include: The first node synchronously transmits the first data frame and the second data frame to a next node based on the interval duration.

When the first node is a sink node, the performing delay alignment on the first data frame and the second data frame may specifically include: The first node synchronously unpacks the first data frame and the second data frame based on the interval duration, to obtain the first service data and the second service data, so that the first node synchronously transmits the first service data and the second service data to a corresponding service system.

It should be noted that, in this embodiment of this application, only an example in which a task of transmitting the two data frames between the source node and the first node is completed through the two transmission channels (the first transmission channel and the second transmission channel) is used to describe the technical solutions provided in this application. In an actual application, when there is a large amount of service data that needs to be synchronously transmitted, a plurality of channels of service data that needs to be synchronously transmitted may be encapsulated into more than three data frames. Then, based on a same principle, the more than three data frames are separately transmitted through different transmission channels. Similarly, in the more than three data frames, each data frame includes an identifier that has a correspondence, indicating a downstream node to perform delay alignment on the more than three data frames. Details are not described in this application again.

In a possible design, in this embodiment of this application, that the first identifier corresponds to the second identifier may specifically include that the first identifier is the same as the second identifier. In other words, a value of a preset field that is used for representing the first identifier and that is in the first data frame is the same as a value of a preset field that is used for representing the second identifier and that is in the second data frame.

For example, the first node receives, from the first transmission channel, a data frame a whose preset field is x, and then the first node buffers the data frame a, and starts to check a data frame received on the second transmission channel. After receiving, from the second transmission channel, a data frame b whose preset field is x, the first node reads the data frame a from the buffer, and synchronously transmits or unpacks the data frame a and the data frame b, that is, performs delay alignment on the data frame a and the data frame b.

In some other designs, that the first identifier corresponds to the second identifier may alternatively mean that another preset correspondence is met between a value of the preset field that is used for representing the first identifier and that is in the first data frame and a value of the preset field that is used for representing the second identifier and that is in the second data frame. For example, a difference between a value of the preset field that is used for representing the first identifier and that is in the first data frame and a value of a preset field that is used for representing the second identifier and that is in the second data frame is a preset value. Provided that the first node can find the first data frame and the second data frame from the received data frame based on the correspondence between the first identifier and the second identifier, a correspondence manner between the first identifier and the second identifier may not be limited in this application.

In a possible design, to help the first node identify the first identifier in the first data frame and the second identifier in the second data frame, in this application, the first identifier and the second identifier may be separately set in an overhead area of the data frame.

Further, for example, the first data frame and the second data frame each are an OTUk frame, and the first identifier is included in a preset field in an overhead area of the OTUk frame. The second identifier is included in a preset field in an overhead area of the OTUk frame. That is, after receiving the first data frame and the second data frame, the first node may identify, by parsing the data frame to an OTUk layer, the first identifier and the second identifier that are separately included in the two data frames, and further perform delay alignment on the two data frames based on indications of the first identifier and the second identifier. It can be learned that because the first node does not need to parse a valid payload (payload) area in the data frame, efficiency of performing delay alignment on the data frame can be improved by using this solution.

When an ODUk frame is encapsulated into an OTUk frame, a plurality of lower-order ODUk channels may be multiplexed into one high-order OTUk channel. Therefore, one OTUk channel may carry not only the first service data and the second service data in this application, but also other service data irrelevant to the first service data and the second service data. Therefore, to avoid impact on transmission of other service data, in this embodiment of this application, the first data frame and the second data frame each may be an ODUk frame. Correspondingly, the first identifier is included in a preset field in an overhead area of the ODUk frame. The second identifier is included in a preset field in an overhead area of the ODUk frame.

In a possible design, the preset field may be specifically an MFAS field.

Specifically, the first identifier may be specifically included in an MFAS field in the overhead area of the ODUk frame, and the second identifier may be included in an MFAS field in the overhead area of the ODUk frame. Alternatively, the first identifier may be specifically included in an MFAS field in the overhead area of the OTUk frame, and the second identifier may be included in an MFAS field in the overhead area of the OTUk frame.

In the foregoing design, it is considered that in the OTN standard, the MFAS field functions as a frame count byte to identify a plurality of multiframes continuously sent on a same transmission channel. Therefore, a function of the MFAS field may be reused, so that content of the MFAS field can not only implement a function of the first identifier or the second identifier, but also indicate multiframe alignment information. In this way, an original function of the MFAS field is not affected, and it can be further ensured that the data frame records the identifier that indicates to perform delay alignment on the data frame. Compared with setting the identifier that indicates to perform delay alignment on the data frame in another field, setting the identifier in the MFAS field can avoid occupying additional overhead resources in the data frame for setting the identifier in the data frame.

In a possible design, when encapsulating the service data into the ODUk frame or the OTUk frame, the source node determines a value (referred to as an initial value of the MFAS field in this application) of an MFAS field in the ODUk frame or the OTUk frame based on a multiframe alignment requirement. In this case, the MFAS fields of the first data frame and the second data frame that are determined in the foregoing manner do not necessarily have a correspondence. Therefore, initial values of the MFAS fields of the first data frame and the second data frame need to be correspondingly changed. Therefore, to reduce a quantity of times of changing the MFAS field in the data frame and reduce impact on the original function of the MFAS field, in the foregoing embodiment of this application, in a process of generating the first data frame and the second data frame, an initial value (for example, referred to as a first initial value) of the MFAS field in the first data frame and an initial value (for example, referred to as a second initial value) of the MFAS field in the second data frame may be first detected, to determine whether the first initial value corresponds to the second initial value.

When the first initial value does not correspond to the second initial value, values of the MFAS fields in the first data frame and the second data frame are regenerated, so that the first identifier in the first data frame corresponds to the second identifier in the second data frame.

When the first initial value corresponds to the second initial value, the values of the MFAS fields of the first data frame and the second data frame are no longer changed. That is, in this case, the first identifier included in the first data frame is the first initial value, and the second identifier included in the second data frame is the second initial value.

In addition, when the first initial value of the MFAS field in the first data frame does not correspond to the second initial value of the MFAS field in the second data frame, the source node may reassign a value to the MFAS field in the first data frame and/or the second data frame, so that a value of the MFAS field in the first data frame corresponds to a value of the MFAS field in the second data frame. In other words, in this case, there are at least one of the following two cases: The first identifier is not the first initial value, or the second identifier is not the second initial value.

For example, that the first identifier corresponds to the second identifier includes that the first identifier is the same as the second identifier.

If both the first initial value and the second initial value that are generated by the source node are X (X may be any value in 0 to 255), the source node no longer changes the MFAS fields of the first data frame and the second data frame (that is, in this case, the first identifier is the first initial value, and the second identifier is the second initial value). In addition, if the first initial value and the second initial value generated by the source node are different, a value may be reassigned to the MFAS field in the first data frame, or a value may be reassigned to the MFAS field in the second data frame. Alternatively, a target value may be generated and the target value is assigned to the MFAS fields in the first data frame and the second data frame, so that the first identifier corresponds to the second identifier.

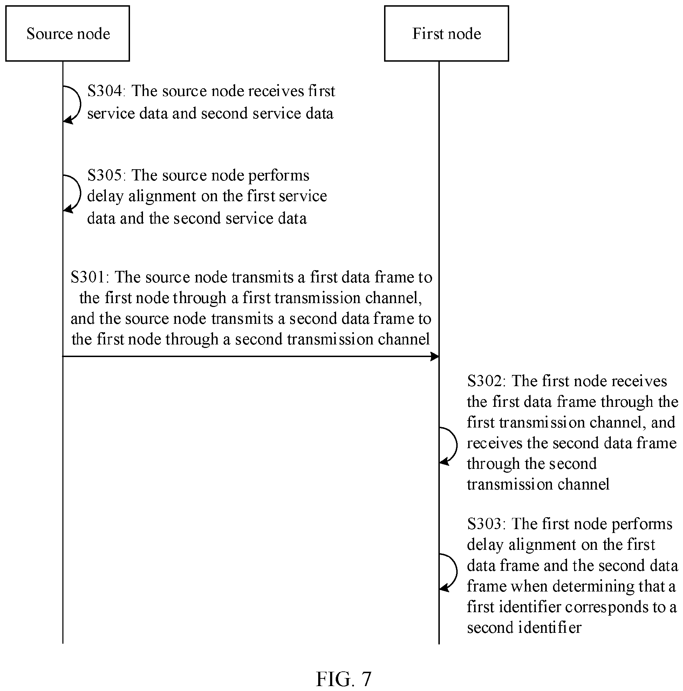

In a possible design, it is considered that when the source node receives the first service data (that is, service data that needs to be carried in the first data frame) and the second service data (that is, service data that needs to be carried in the second data frame) from an upstream service system, there is already a delay difference between the first service data and the second service data. For example, there may be a case in which the source node first receives the first service data, and then after a long time, the source node receives the second service data. Therefore, as shown in FIG. 7, in the technical solution provided in this embodiment of this application, before the source node performs step S301, the method may further include the following steps S304 and S305.

S304: The source node receives the first service data and the second service data.

S305: The source node performs delay alignment on the first service data and the second service data.

In the foregoing design, after receiving two channels of service data that needs to be synchronously transmitted, the source node first performs delay alignment on the two channels of service data. In this way, the source node can synchronously transmit, to the first node as much as possible, the data frame including the two channels of service data. This reduces a workload of the first node when performing delay alignment on the first data frame and the second data frame.

In an implementation, step S305 may be specifically: The source node determines interval duration between receiving the first service data and receiving the second service data. For example, if the source node receives the first service data from the service system at a moment A, and then receives the second service data at a moment B, the source node determines that the interval duration between receiving the first service data and receiving the second service data is a time length between the moment A and the moment B. The source node performs delay alignment on the first service data and the second service data based on the interval duration.

For example, the source node includes: a hardware unit, configured to encapsulate the service data into the data frame and send the data frame to the first node through the first transmission channel, that is, a first transmission subunit; and a hardware unit configured to encapsulate the service data into the data frame and send the data frame to the first node through the second transmission channel, that is, a second transmission subunit. The source node may control a time at which the first service data is sent to the first transmission subunit and a time at which the second service data is sent to the second transmission subunit, to synchronously encapsulate the first service data into the first data frame and encapsulate the second service data into the second data frame. Therefore, delay alignment is performed on the first service data and the second service data.

In the foregoing technical solution provided in this embodiment of this application, when the source node sends, to the downstream node (that is, the first node), a plurality of data frames that need to be synchronously transmitted, identifiers that correspond to each other are separately set in the plurality of data frames, and then the plurality of data frames are sent to the first node through a plurality of transmission channels. In this way, the first node may find, by using the identifiers that correspond to each other and that are included in the plurality of data frames, data frames on which delay alignment needs to be performed, to perform delay alignment on these data frames. According to the foregoing method, a delay difference between the plurality of data frames on a transmission path can be eliminated. This ensures normal running of a client service. Further, in the solution provided in this application, because the data frame sent by the source node includes the identifiers corresponding to each other, the first node can determine, without parsing service data in the data frame, the data frame on which delay alignment needs to be performed, so that delay alignment can be quickly completed in a transmission process on the data frame that needs to be synchronously transmitted. This improves efficiency of delay alignment on the data frame.

The solutions provided in embodiments of this application are mainly described from a perspective of interaction between network elements. It may be understood that, to implement the foregoing functions, the foregoing node includes a corresponding hardware structure and/or a software module for performing the function. A person of ordinary skill in the art should easily be aware that, in combination with the units in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function module division may be performed on a node (for example, the source node, the intermediate node, and the sink node) based on the foregoing method examples. For example, each function module may be obtained through division based on each corresponding function, or two or more functions may be integrated into one processing module. The integrated module may be implemented in a form of hardware, or may be implemented in a form of a software function module. Optionally, in embodiments of this application, division into modules is used as an example, and is merely logical function division. In actual implementation, another division manner may be used.

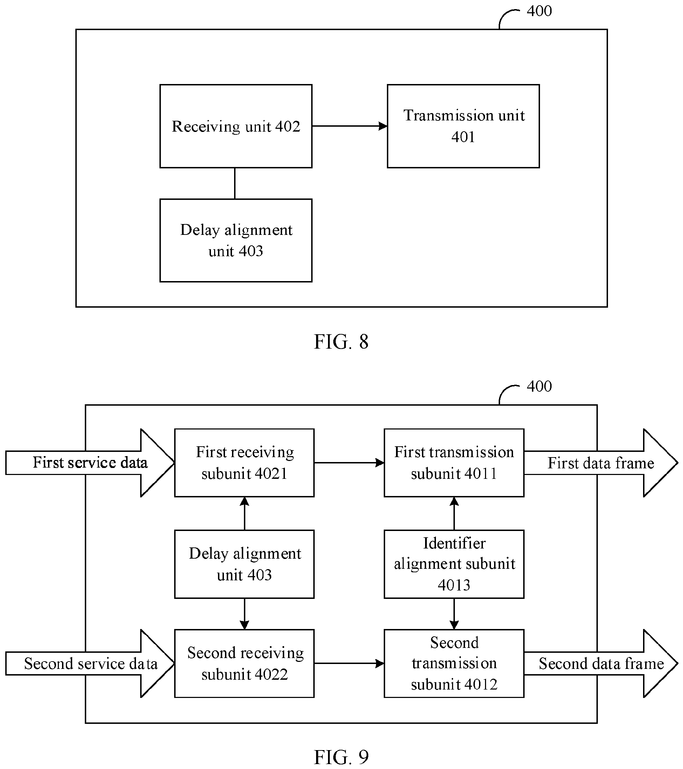

FIG. 8 shows a schematic composition diagram of a data transmission apparatus 400. The data transmission apparatus 400 may be a chip or a system on chip of a source node. The data transmission apparatus 400 is configured to perform a function of the source node in the foregoing embodiments. In a possible implementation, the data transmission apparatus 400 includes a transmission unit 401. Specifically, the transmission unit 401 is configured to perform step S301 in FIG. 5. For example, the transmission unit 401 may transmit a first data frame to a first node through a first transmission channel, and transmit a second data frame to the first node through a second transmission channel. The first node is a downstream node of the source node. The first data frame includes a first identifier, and the second data frame includes a second identifier. The first identifier corresponds to the second identifier, indicating the first node to perform delay alignment on the first data frame and the second data frame.

In a possible design, the first data frame further includes first service data, and the second data frame further includes second service data. As shown in FIG. 8, the data transmission apparatus 400 may further include a receiving unit 402 and a delay alignment unit 403. The receiving unit 402 may be configured to perform step S304 in FIG. 5, and the delay alignment unit 403 may be configured to perform step S302 in FIG. 5.

For example, the receiving unit 402 may be configured to receive the first service data and the second service data.

The delay alignment unit 403 may be configured to perform delay alignment on the first service data and the second service data.

In a possible design, the delay alignment unit 403 may be specifically configured to determine interval duration between receiving the first service data and receiving the second service data. The delay alignment unit 403 may be further specifically configured to perform delay alignment on the first service data and the second service data based on the interval duration.

In a possible design, the delay alignment unit 403 may be specifically configured to control, based on the interval duration, the receiving unit 402 to synchronously send the first service data and the second service data to the transmission unit.

The transmission unit 401 may be further configured to encapsulate the first service data into the first data frame, and encapsulate the second service data into the second data frame.

In a possible design, the first data frame and the second data frame each are an ODUk frame. The first identifier is included in a preset field in an overhead area of the ODUk frame, and the second identifier is included in a preset field in an overhead area of the ODUk frame.

Alternatively, the first data frame and the second data frame each are an OTUk frame. The first identifier is included in a preset field in an overhead area of the OTUk frame, and the second identifier is included in a preset field in an overhead area of the OTUk frame.

In a possible design, the preset field is an MFAS field.

In a possible design, that the first identifier corresponds to the second identifier includes that the first identifier is the same as the second identifier.

In a possible design, when a first initial value of an MFAS field of the first data frame corresponds to a second initial value of an MFAS field of the second data frame, the first identifier is the first initial value, and the second identifier is the second initial value.

In an example, the transmission unit 401 may include a first transmission subunit 4011, a second transmission subunit 4012, and an identifier alignment subunit 4013, and the receiving unit 402 may include a first receiving subunit 4021 and a second receiving subunit 4022. Further, as shown in FIG. 9, an embodiment of this application further provides a schematic composition diagram of another data transmission apparatus 400.

Specifically, a first receiving subunit 4021 is configured to receive first service data.

A second receiving subunit 4022 is configured to receive second service data.

A delay alignment unit 403 is specifically configured to control the first receiving subunit 4021 and the second receiving subunit 4022 to synchronously send the first service data and the second service data to a first transmission subunit 4011 and a second transmission subunit 4012.

An identifier alignment subunit 4013 is specifically configured to control the first transmission subunit 4011 and the second transmission subunit 4012 to make a first identifier in a first data frame correspond to a second identifier in a second data frame when encapsulating the first service data into the first data frame and encapsulating the second service data into the second data frame.

The first transmission subunit 4011 is configured to transmit the first data frame to a first node through a first transmission channel. The second transmission subunit 4012 is configured to transmit the second data frame to the first node through a second transmission channel.

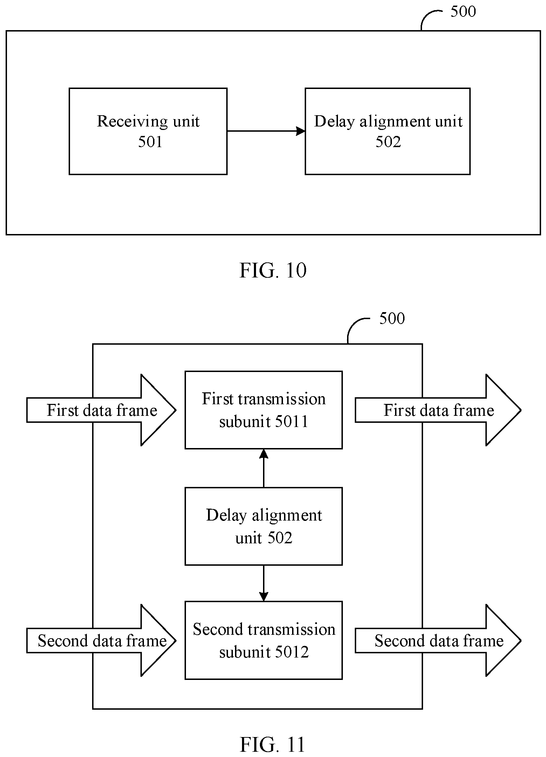

FIG. 10 shows a schematic composition diagram of a data transmission apparatus 500. The data transmission apparatus 500 may be a chip or a system on chip of a first node. The data transmission apparatus 500 is configured to perform a function of the first node in the foregoing embodiments. In an implementable, the data transmission apparatus 500 includes a receiving unit 501 and a delay alignment unit 502.

Specifically, the receiving unit 501 may be configured to perform S302 shown in FIG. 5. For example, the receiving unit 501 may be configured to receive a first data frame through a first transmission channel, and receive a second data frame through a second transmission channel. The first data frame includes a first identifier, and the second data frame includes a second identifier.

The delay alignment unit 502 may be configured to perform S303 shown in FIG. 5. The delay alignment unit 502 may be configured to perform delay alignment on the first data frame and the second data frame when determining that the first identifier corresponds to the second identifier.

For example, the first node is a first node or a sink node.

In a possible design, the delay alignment unit 502 may be specifically configured to determine interval duration between receiving the first data frame and receiving the second data frame when determining that the first identifier corresponds to the second identifier.

The delay alignment unit 502 may be further specifically configured to perform delay alignment on the first data frame and the second data frame based on the interval duration.

In a possible design, the first data frame and the second data frame each are an ODUk frame. The first identifier is included in a preset field in an overhead area of the ODUk frame, and the second identifier is included in a preset field in an overhead area of the ODUk frame.

Alternatively, the first data frame and the second data frame each are an OTUk frame. The first identifier is included in a preset field in an overhead area of the OTUk frame, and the second identifier is included in a preset field in an overhead area of the OTUk frame.

In a possible design, the preset field is an MFAS field.

In a possible design, that the first identifier corresponds to the second identifier includes that the first identifier is the same as the second identifier.

In a possible design, when the first node is an intermediate node, the delay alignment unit 502 is specifically configured to synchronously transmit the first data frame and the second data frame to a downstream node of the data transmission apparatus 50.

In an example, when the first node is an intermediate node, the receiving unit 501 may include a first transmission subunit 5011 and a second transmission subunit 5012. Further, as shown in FIG. 11, an embodiment of this application further provides a schematic composition diagram of another data transmission apparatus 500.

Specifically, a first transmission subunit 5011 is configured to receive a first data frame through a first transmission channel.

An second transmission subunit 5012 is configured to receive a second data frame through a second transmission channel.

A delay alignment unit 502 is specifically configured to control the first transmission subunit 5011 and the second transmission subunit 5012 to synchronously send the first data frame and the data frame to a second node, to implement delay alignment on the first data frame and the second data frame.

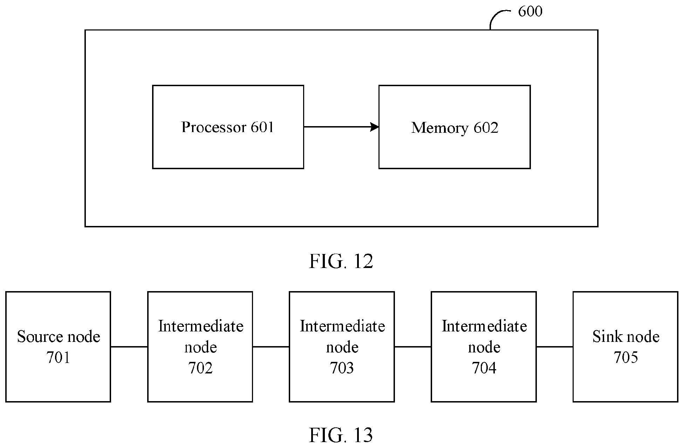

In another embodiment, FIG. 12 is a schematic composition diagram of another data transmission apparatus 600. The data transmission apparatus 600 includes one or more processors 601 and one or more memories 602. The one or more processors 601 are coupled to the one or more memories 602, and the memory 602 is configured to store computer-executable instructions. For example, in some embodiments, when the processor 601 executes the instructions stored in the memory 602, the data transmission apparatus 600 is enabled to perform S301 shown in FIG. 5 and another operations that need to be performed by a source node. In some other embodiments, when the processor 601 executes the instructions stored in the memory 602, the data transmission apparatus 600 is enabled to perform S304 and S305 shown in FIG. 7 and other operations that need to be performed by a first node.

An embodiment of this application further provides a data transmission system. The data transmission system includes a source node, one or more intermediate nodes, and a sink node. As shown in FIG. 13, a data transmission system 70 includes a source node 701, an intermediate node 702/703/704, and a sink node 705.

The source node is configured to transmit a data frame including an identifier to a downstream node of the source node according to the method provided in the foregoing embodiment.

For example, in FIG. 13, the source node 701 transmits a first data frame including a first identifier to the intermediate node 702 through a first transmission channel, and transmits a second data frame including an second identifier to the intermediate node 702 through a second transmission channel (there is the correspondence described in the foregoing embodiment between the first identifier and the second identifier, and in addition, the first transmission channel and the second transmission channel are separately transmission channels between the source node 701 and the intermediate node 702, which are not shown in FIG. 13). For steps performed by the source node, refer to the steps performed by the source node in the data transmission method provided in the foregoing embodiment. Details are not described herein again.

In addition, in the data transmission system, at least one of the one or more intermediate nodes and/or the sink node is configured to perform, according to the method provided in the foregoing embodiment, delay alignment on the data frame that includes the identifier.

For example, the example in FIG. 13 continues. After receiving the first data frame through the first transmission channel and receiving the second data frame through the second transmission channel, the intermediate node 702 performs delay alignment on the first data frame and the second data frame when determining that the first identifier included in the first data frame corresponds to the second identifier included in the second data frame.

After the intermediate node 702 sends the delay-aligned first data frame and the delay-aligned second data frame to the intermediate node 703 through the transmission channel between the intermediate node 702 and the intermediate node 703, based on a same principle as a processing process of the intermediate node 702, the intermediate node 703 and the intermediate node 704 each may sequentially perform delay alignment on the first data frame and the second data frame according to the same method as the intermediate node 702 when determining that the first identifier included in the first data frame corresponds to the second identifier included in the second data frame. Then, the data frame is transmitted to a downstream node, until the data frame is transmitted to the sink node 705.

Similarly, the sink node 705 performs delay alignment on the first data frame and the second data frame when determining that the first identifier included in the first data frame corresponds to the second identifier included in the second data frame. In this way, the sink node 705 can synchronously obtain, through parsing, service data carried in the first data frame and the second data frame.

It should be noted that, in the foregoing example, for ease of description, after the first data frame and the second data frame are sent from the source node 701, delay alignment is performed on the data frame at each transmission node (that is, the intermediate node 702/703/704 and the sink node 705) through which the data frame passes according to the technical means provided in this application. However, it is easy to understand that in a specific implementation process, it is not necessary for each transmission node to perform delay alignment on the data frame according to the technical means provided in this application. The following provides description with reference to an example.

In an implementation, in consideration of reducing overheads of the transmission node and the like, in a data frame transmission process, it is not necessary for each transmission node to perform delay alignment on the data frame.

For example, in FIG. 13, after the first data frame and the second data frame are sent from the source node 701, the intermediate node 702 may not perform delay alignment on the data frames, but directly transmit the data frames to a next node (that is, the intermediate node 703). The intermediate node 703 performs delay alignment on the data frame according to the technical means provided in this application. The intermediate node 704 may directly transmit the data frame to the sink node 705 without performing delay alignment on the data frame. Then, the sink node 705 performs delay alignment on the data frame according to the technical means provided in this application.

In another implementation, it is considered that devices included in the data transmission system may include devices from different vendors. Therefore, when the data frame passes through the devices of different vendors, manners of performing delay alignment on the data frame may also be different. A part of transmission nodes may perform delay alignment on the data frame according to the technical means provided in this application, and the other transmission nodes may perform delay alignment on the data frame by using other manners.

For example, in FIG. 13, after the first data frame and the second data frame are sent from the source node 701, the intermediate node 702 performs delay alignment on the data frame according to the technical means provided in this application (that is, performs delay alignment on the first data frame and the second data frame when determining that the first identifier included in the first data frame corresponds to the second identifier included in the second data frame). Then, the intermediate node 703 may not perform delay alignment on the data frame according to the technical means provided in this application (for example, the intermediate node 703 may parse the service data in the data frame, then determine, based on the obtained service data, that delay alignment needs to be performed on a data frame that carries which service data, and then perform delay alignment on the determined data frame). Similarly, in a subsequent transmission process, the intermediate node 704 and the sink node 705 may also perform delay alignment on the data frames in respective corresponding manners.

In other words, in the data transmission system provided in this embodiment of this application, in the one or more intermediate nodes or the sink node, at least one transmission node can perform, according to the method provided in the foregoing embodiment, delay alignment on the data frame including the identifier. A working process of a transmission node to which the method provided in this embodiment of this application is not applied in the data transmission system is not limited in this application.

An embodiment of this application further provides a computer-readable storage medium. The computer-readable storage medium stores instructions. When the instructions are run, the method provided in embodiments of this application is performed.

An embodiment of this application further provides a computer program product including instructions. When the computer program product runs on a computer, the computer is enabled to perform the method provided in embodiments of this application.

In addition, an embodiment of this application further provides a chip. The chip includes a processor. When the processor executes computer program instructions, the chip is enabled to perform the method provided in embodiments of this application. The instructions may be from a memory inside the chip, or may be from a memory outside the chip. Optionally, the chip further includes an input/output circuit used as a communication interface.

All or a part of functions, actions, operations, steps, and the like in the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data transmission method, wherein the method comprises:
transmitting, by a source node, a first data frame to a first node through a first transmission channel, and transmitting a second data frame to the first node through a second transmission channel, wherein
the first node is a downstream node of the source node; the first data frame comprises a first identifier, and the second data frame comprises a second identifier; and the first identifier corresponds to the second identifier, indicating the first node to perform delay alignment on the first data frame and the second data frame.

2. The data transmission method according to claim 1, wherein the first data frame further comprises first service data, and the second data frame further comprises second service data; and
before the transmitting, by a source node, a first data frame to a first node through a first transmission channel, and transmitting a second data frame to the first node through a second transmission channel, the method further comprises:
receiving, by the source node, the first service data and the second service data; and
performing, by the source node, delay alignment on the first service data and the second service data.

3. The data transmission method according to claim 2, wherein the performing, by the source node, delay alignment on the first service data and the second service data comprises:
determining, by the source node, interval duration between receiving the first service data and receiving the second service data; and
performing delay alignment on the first service data and the second service data based on the interval duration.

4. The data transmission method according to any one of claims 1 to 3, wherein
the first data frame and the second data frame each are an optical channel data unit ODUk frame, the first identifier is comprised in a preset field in an overhead area of the ODUk frame, and the second identifier is comprised in a preset field in an overhead area of the ODUk frame; or
the first data frame and the second data frame each are an optical channel transport unit OTUk frame, the first identifier is comprised in a preset field in an overhead area of the OTUk frame, and the second identifier is comprised in a preset field in an overhead area of the OTUk frame.

5. The data transmission method according to claim 4, wherein
the preset field is a multiframe alignment signal MFAS field.

6. The data transmission method according to claim 5, wherein when a first initial value of an MFAS field of the first data frame corresponds to a second initial value of an MFAS field of the second data frame, the first identifier is the first initial value, and the second identifier is the second initial value.

7. The data transmission method according to any one of claims 1 to 6, wherein that the first identifier corresponds to the second identifier comprises: the first identifier is the same as the second identifier.

8. A data transmission method, wherein the method comprises:
receiving, by a first node, a first data frame through a first transmission channel, and receiving a second data frame through a second transmission channel, wherein the first data frame comprises a first identifier, and the second data frame comprises a second identifier; and
performing, by the first node, delay alignment on the first data frame and the second data frame when determining that the first identifier corresponds to the second identifier, wherein
the first node is an intermediate node or a sink node.

9. The data transmission method according to claim 8, wherein the performing delay alignment on the first data frame and the second data frame comprises:
determining, by the first node, interval duration between receiving the first data frame and receiving the second data frame; and
performing, by the first node, delay alignment on the first data frame and the second data frame based on the interval duration.

10. The data transmission method according to claim 8 or 9, wherein the first data frame and the second data frame each are an optical channel data unit ODUk frame, the first identifier is comprised in a preset field in an overhead area of the ODUk frame, and the second identifier is comprised in a preset field in an overhead area of the ODUk frame; or
the first data frame and the second data frame each are an optical channel transport unit OTUk frame, the first identifier is comprised in a preset field in an overhead area of the OTUk frame, and the second identifier is comprised in a preset field in an overhead area of the OTUk frame.

11. The data transmission method according to claim 10, wherein
the preset field is a multiframe alignment signal MFAS field.

12. The data transmission method according to any one of claims 8 to 11, wherein that the first identifier corresponds to the second identifier comprises: the first identifier is the same as the second identifier.

13. A data transmission apparatus, comprising:
a transmission unit, configured to transmit a first data frame to a first node through a first transmission channel, and transmit a second data frame to the first node through a second transmission channel, wherein
the first node is a downstream node of the data transmission apparatus; the first data frame comprises a first identifier, and the second data frame comprises a second identifier; and the first identifier corresponds to the second identifier, indicating the first node to perform delay alignment on the first data frame and the second data frame.

14. The data transmission apparatus according to claim 13, wherein the first data frame further comprises first service data, and the second data frame further comprises second service data; and
the data transmission apparatus further comprises:
a receiving unit, configured to receive the first service data and the second service data; and
a delay alignment unit, configured to perform delay alignment on the first service data and the second service data.

15. The data transmission apparatus according to claim 14, wherein
the delay alignment unit is specifically configured to: determine interval duration between receiving the first service data and receiving the second service data, and perform delay alignment on the first service data and the second service data based on the interval duration.

16. The data transmission apparatus according to claim 15, wherein
the delay alignment unit is specifically configured to control, based on the interval duration, the receiving unit to synchronously send the first service data and the second service data to the transmission unit; and
the transmission unit is further configured to encapsulate the first service data into the first data frame, and encapsulate the second service data into the second data frame.

17. The data transmission apparatus according to any one of claims 13 to 15, wherein the first data frame and the second data frame each are an optical channel data unit ODUk frame, the first identifier is comprised in a preset field in an overhead area of the ODUk frame, and the second identifier is comprised in a preset field in an overhead area of the ODUk frame; or
the first data frame and the second data frame each are an optical channel transport unit OTUk frame, the first identifier is comprised in a preset field in an overhead area of the OTUk frame, and the second identifier is comprised in a preset field in an overhead area of the OTUk frame.

18. The data transmission apparatus according to claim 17, wherein the preset field is a multiframe alignment signal MFAS field.

19. The data transmission apparatus according to claim 18, wherein when a first initial value of an MFAS field of the first data frame corresponds to a second initial value of an MFAS field of the second data frame, the first identifier is the first initial value, and the second identifier is the second initial value.

20. The data transmission apparatus according to any one of claims 13 to 19, wherein that the first identifier corresponds to the second identifier comprises: the first identifier is the same as the second identifier.

21. A data transmission apparatus, comprising:
a receiving unit, configured to receive a first data frame through a first transmission channel, and receive a second data frame through a second transmission channel, wherein the first data frame comprises a first identifier, and the second data frame comprises a second identifier; and
a delay alignment unit, configured to perform delay alignment on the first data frame and the second data frame when determining that the first identifier corresponds to the second identifier, wherein
the data transmission apparatus is an intermediate node or a sink node.

22. The data transmission apparatus according to claim 21, wherein
the delay alignment unit is specifically configured to: determine interval duration between receiving the first data frame and receiving the second data frame when determining that the first identifier corresponds to the second identifier, and perform delay alignment on the first data frame and the second data frame based on the interval duration.

23. The data transmission apparatus according to claim 21 or 22, wherein the first data frame and the second data frame each are an optical channel data unit ODUk frame, the first identifier is comprised in a preset field in an overhead area of the ODUk frame, and the second identifier is comprised in a preset field in an overhead area of the ODUk frame; or
the first data frame and the second data frame each are an optical channel transport unit OTUk frame, the first identifier is comprised in a preset field in an overhead area of the OTUk frame, and the second identifier is comprised in a preset field in an overhead area of the OTUk frame.

24. The data transmission apparatus according to claim 23, wherein the preset field is a multiframe alignment signal MFAS field.

25. The data transmission apparatus according to any one of claims 21 to 24, wherein that the first identifier corresponds to the second identifier comprises: the first identifier is the same as the second identifier.

26. A data transmission apparatus, wherein the data transmission apparatus comprises one or more processors and one or more memories, the one or more processors are coupled to the one or more memories, and the one or more memories store computer instructions;
when the one or more processors execute the computer instructions, the data transmission apparatus is enabled to perform the data transmission method according to any one of claims 1 to 7; or
when the one or more processors execute the computer instructions, the data transmission apparatus is enabled to perform the data transmission method according to any one of claims 8 to 12.

27. A data transmission system, comprising a source node, one or more intermediate nodes, and a sink node, wherein the source node is configured to perform the data transmission method according to any one of claims 1 to 7, and at least one of the one or more intermediate nodes and/or the sink node is configured to perform the data transmission method according to any one of claims 8 to 12.

28. A computer-readable storage medium, wherein the computer-readable storage medium stores instructions, and when the instructions are run on a computer, the computer is enabled to perform the data transmission method according to any one of claims 1 to 7, or the computer is enabled to perform the data transmission method according to any one of claims 8 to 12.

29. A computer program product, wherein the computer program product comprises instructions, and when the computer program product runs on a computer, the computer is enabled to perform the data transmission method according to any one of claims 1 to 7, or the computer is enabled to perform the data transmission method according to any one of claims 8 to 12.

30. A chip, wherein the chip comprises a processor, and when the processor executes computer program instructions, the chip is enabled to perform the data transmission method according to any one of claims 1 to 7, or perform the data transmission method according to any one of claims 8 to 12.
